# EUROPEAN PATENT APPLICATION

(11) **EP 4 838 111 A2**
(43) Date of publication of application: **11.11.2026**
(21) Application number: 26207544.3
(22) Date of filing: 26.07.2024
(51) Int. Cl.: F16H 1/28

(54) **GEAR DEVICE FOR WIND TURBINE**

(30) Priority: 08.08.2023 NO 20230844
(62) Document number(s) of the earlier application(s) in accordance with Art. 76 EPC: 24773590.5 / 4 758 344
(71) Applicant: Ra Wind AS, 4323 Sandnes (NO)
(72) Inventor: Haughom, Per Olav, Tonstad (NO)
(74) Representative: Håmsø Patentbyrå AS

(57) **Abstract**

There is described a gear assembly (10) comprising two parallel gear devices (1). Also described is a wind turbine comprising a gear assembly (10).

## Description

The invention relates to a gear device for a wind turbine. More specifically, the invention relates to a gear device comprising two planetary gears which operate in parallel to distribute load between the two planetary gears. The invention also relates to a gear assembly comprising two such gear devices as well as a wind turbine comprising a gear device or a gear assembly.

Development of wind turbines has gone in the direction of ever larger structures with correspondingly increased output. Today, wind turbines with an output of up to and even more than 20 MW are being developed. The wind turbines are driven by a wind propeller that is put into rotation by a wind flow. To achieve the desired, large outputs, the diameter of the propeller must be increased. With a turbine size of over 20 MW, the rotational speed becomes very low. For example, a wind propeller belonging to a 20 MW installation will typically have a rotational speed of around 7.5 rpm (revolutions per minute). Low rotational speed combined with high power results in extremely large torques, often in the order of 20,000,000 Nm. Additional loads occur due to a "messy" load, both because of misalignments from production tolerances and extreme loads.

The gear system in such a wind turbine must be able to transfer the torque from the propeller and convert this into high input rotational speed to a generator, which produces electricity, in an efficient way. The gear system is currently one of the biggest challenges that must be solved for the large wind turbines of the future.

One of the challenges is to provide a gear system that is strong with a long service life and which at the same time has a low weight. Today's wind turbines mainly use planetary gear solutions, i.e. gears with a central sun gear with surrounding planet gears that mesh with the sun gear and a surrounding ring gear. When such gear systems are to manage large torques, as exemplified above, they become very large, which presents significant challenges. The ring gear with toothing often has a diameter of around 6-8 m for the largest turbines, which makes both production, installation, and maintenance difficult. The large torques and the large gear ratio also wear on the components of the gear system, which results in heavy wear and frequent need for the use of spare parts, which are correspondingly large and difficult to handle as the original components. The development towards increasingly larger wind turbines with associated large components also entails a need for certification of increasingly new and larger gears.

The invention has for its object to remedy or to reduce at least one of the drawbacks of the prior art, or at least provide a useful alternative to prior art.

The object is achieved through the features which are specified in the description below and in the following claims.

An option for reducing the size of individual components is to use modular solutions that can be scaled as needed. In this way, production and installation can be made more efficient, and maintenance and the use of spare parts can be minimised, as will be apparent from the description below. In the present description, a gear solution is presented where the gear can be assembled from one or more standardized gear devices adapted to varied sizes of the wind turbine.

According to a first aspect, the invention relates to a gear device comprising:
- two parallel planetary gears arranged one behind the other along a rotation axis of the gear device, each planetary gear comprises a sun gear, a ring gear and a set of planet gears, the two sets of planet gears are arranged in a common planet gear carrier, and the two sun gears are connected to a common rotary shaft along the rotation axis of the gear device;
- a gear device housing which encircles at least a portion of the two planetary gears, where the gear device further comprises an internal torque distributor connected to each of the ring gears and to the gear device housing, so that the two ring gears are allowed to twist relative to each other around the rotation axis during use.

By allowing the two ring gears to twist relative to each other around the rotation axis during use, uneven loading of the two planetary gears will be avoided or considerably reduced. Such uneven loading, which could lead to overloading of individual components, can be the result of misalignments because of torque loading and production tolerances. By assembling two planetary gears in this way and allowing them to operate in parallel with torque distribution, it is possible to replace one large planetary gear, as exemplified above with a diameter of 6-8 meters, with two smaller planetary gears assembled in a gear device according to the first aspect of the invention.

In one embodiment, the internal torque distributor may comprise a plurality of shafts, where each end of each of the shafts is supported in one of the ring gears, and where the shaft, between its two ends, is supported in the gear device housing. In one embodiment, the ring gears can be designed with holes distributed with even spacing around the entire circumference, where the ends of the shafts are supported in these holes. Correspondingly, the gear device housing may be designed with an internal flange with a corresponding number of holes with corresponding distribution.

In an advantageous embodiment, the support may be via spherical bearings, such as spherical plain bearings, whereby the two ring gears can be allowed to twist relative to each other with full freedom of rotation.

In an alternative embodiment, the internal torque distributor can be designed as a differential. The two ring gears can be connected by a plurality of bevel gears supported around rotation bolts which are oriented radially to the rotation axis of the planetary gear, and mesh with an external toothing groove / toothed pinion on each of the ring gears. The bevel gears are located axially between the ring gears, so that each bevel gear meshes with each of the ring gears' toothing grooves axially between them. The bevel gears may further preferably be distributed evenly around the inner circumference of the gear device housing. In one embodiment, there may be eight bevel gears distributed inside the gear device housing. The two ring gears are thus allowed some rotation relative to each other around the rotation axis of the gear device. In "perfect" operation, without misalignments from production tolerances and torque, the two ring gears will stand still and the bevel gears will not rotate about their own axis. In the event of misalignments, due to production tolerances and torque load, some relative twisting is made possible between the two ring gears to equalize the load on the components of the gear device.

According to a second aspect, the invention relates to a gear assembly comprising two parallel gear devices according to the first aspect of the invention, where the rotary shafts connected to the sun gears in each of the gear devices are output rotary shafts, where the planet gear carriers of the two gear devices together are arranged to be coupled to an input torque, and where the output rotary shafts from each gear device are interconnected in an external torque distributor, so that the two output rotary shafts are allowed to twist relative to each other around the rotation axis in use.

By the output rotary shafts being connected to an external torque distributor, the distribution of output torque from two of the two output rotary shafts is also made possible. The external torque distributor rotates together with the output rotary shafts, so that this can further be coupled to a generator in use. In this way, misalignments from torque load and production tolerances on the output rotary shafts are equalised, so that output torque from the two gear devices is equalised. Thus, some relative twisting of the two output rotary shafts can be permitted without overloading individual components, thereby enabling the assembly of several gear devices.

A significant advantage of interconnecting gear devices in this way, is that, instead of building increasingly larger gears adapted to increasingly larger wind turbines, it is possible to assemble several gear devices with a standard design and size as needed, i.e. according to the size of the wind turbines. This greatly simplifies production, installation, and maintenance. By using standard devices, which are put together as needed, having to certify new, purpose designed gear solutions for new wind turbines of ever-increasing size, is also avoided. In this description and in the figures, which are described in detail in the following, the gear assemblies are exemplified with a combination of two gear devices operating in parallel, but it should also be understood that a larger, even number of gear devices can be used by need.

The two planet gear carriers must both be connected to the input torque in parallel. A practical way to do this is to connect the input torque to the planet gear carrier closest to the input torque, such as a rotor of a wind turbine, and then interconnect the two planet gear carriers with an adapter, a rigid connection that causes the two planet gear carriers to rotate together at the same rotational speed as the input torque.

In one embodiment, the external torque distributor may comprise an external torque distributor housing and two rotary discs, where each rotary disc is connected to a distal end of a respective output rotary shaft from each of the gear devices, where the external torque distributor further comprises shafts supported with one end in each of the rotary discs, and in the external torque distributor housing between their respective ends. In this way, the two output rotary shafts are allowed to twist relative to each other around the rotation axis. In the same way as for the internal torque distributor, described above, this enables a three-point support of the two output rotary shafts relative to each other. A difference is that the external torque distributor rotates together with the output rotary shafts, while the internal torque distributor, during normal operation and except for the twisting that occurs due to misalignments and particularly heavy loads, stands still. The two rotary discs, which are rigidly connected to respective output rotary shafts, comprise, in one embodiment, a plurality of holes evenly distributed around the circumference, and where the shafts are supported in these holes. The external torque distributor housing can similarly be designed with a flange that projects radially inwards in the torque distributor housing, and where the flange is designed with an equal number of holes with a corresponding distribution around the circumference. In an advantageous embodiment, the shafts may be supported in the rotary discs and in the external torque distributor housing via spherical bearings, such as spherical plain bearings. The two output rotary shafts are thus allowed to twist relative to each other with full freedom of rotation while unevenness is compensated, so that the output torque from the two gear devices is evenly distributed in the external torque distributor, which again will typically be coupled to a generator.

In one embodiment, the output rotary shaft from one gear device can extend inside and concentrically with the output rotary shaft from the other gear device along the rotation axis towards the external torque distributor. The output rotary shaft from the gear device closest to the input torque thus has a smaller diameter than the output rotary shaft from the other gear device and extends inside this second output rotary shaft. In this way, the two gear devices can in a practical way be placed one behind the other along the common rotation axis, while enabling easy access to distal ends of the rotary shafts in the external torque distributor housing.

In a third aspect, the invention relates to a wind turbine comprising a gear device according to the first aspect of the invention, where the wind turbine comprises a rotor coupled to the planet gear carrier of the gear device with an input torque, and where the wind turbine further comprises a generator coupled to the common rotary shaft.

In a fourth aspect, the invention relates to a wind turbine comprising a gear assembly according to the second aspect of the invention, where the wind turbine comprises a rotor coupled to the planet gear carriers of the gear assembly with an input torque, and where the wind turbine further comprises a generator which is coupled to the external torque distributor.

The wind turbine according to the third aspect of the invention thus uses a single gear device according to the first aspect of the invention, while the wind turbine according to the fourth aspect of the invention uses a gear assembly according to the second aspect of the invention. The modularity of the gear devices means that an even number of such gear devices are be put together as needed.

In one embodiment, the wind turbine may comprise a torque absorber which connects the gear device housing(s) to a wind turbine foundation, such as e.g. a platform on top of a wind turbine column/tower where the nacelle is located. Extreme torque loads / torque peaks can cause the planetary gears to lock completely or partially. The torque will thus be transferred from the ring gears to the gear device housing(s) due to their common support in the internal torque distributor. As the gear device housing(s) is/are connected to one or more torque absorbers / shock absorbers, input rotary torque will be able to rotate the entire gear device housing around the rotation axis of the gear device, so that the torque is taken up in the torque absorber(s). In one embodiment, the torque absorber can be a hydraulic cylinder. Alternatively, the torque absorber can be a pneumatic cylinder or a mechanical spring.

In the following is described examples of preferred embodiments illustrated in the accompanying drawings, wherein:
- Fig. 1: shows a wind turbine according to the present invention;
- Fig. 2: shows, in a larger scale, details of the wind turbine's nacelle;
- Fig. 3: shows, seen in perspective, a gear device according to the present invention;
- Fig. 4: shows an exploded view of the gear device from fig. 3;
- Fig. 5: shows, enlarged, a detail from fig. 4;
- Fig. 6: shows, seen in perspective, a gear assembly according to the present invention;
- Fig. 7: shows an exploded view of the gear assembly from fig. 6;
- Fig. 8: shows, enlarged, a detail from fig. 7;
- Fig. 9: shows the gear assembly from fig. 6 seen from above;
- Fig. 10: shows a section seen through the line A-A from fig. 9;
- Fig. 11: shows a section seen through the line D-D from fig. 10;
- Fig. 12: shows a section seen through the line B-B from fig. 10;
- Fig. 13: shows a section seen through the line E-E from fig. 9;
- Fig. 14 A-B: show, enlarged, detail F and G, respectively, from fig. 10;
- Fig. 15 A-E: show a first, alternative embodiment of an external torque distributor;
- Fig. 16 A-E: show a second, alternative design of an external torque distributor;
- Fig. 17 A-B: show the external torque distributor from fig. 16 exploded and in section, respectively; and
- Fig. 18: shows an alternative embodiment of an internal torque distributor.

In what follows, reference numeral 1 will refer to a gear device according to the first aspect of the invention. Reference numerals 10 and 100 refer to a gear assembly according to the second aspect of the invention and to a wind turbine according to the fourth aspect of the invention, respectively. Any positional indications refer to the positions shown in the figures. Same or corresponding elements are indicated by same reference numerals. For clarity reasons, some elements may in some of the figures be without reference numerals.

A person skilled in the art will understand that the figures are just principal sketches. The relative proportions of individual elements may also be distorted.

It should also be noted that components in a section are shaded with the same shading in the figures. Different shading is therefore not used to distinguish different components. Components that lie behind the actual section, but which will be visible when looking into the section, are shown unshaded in the figures.

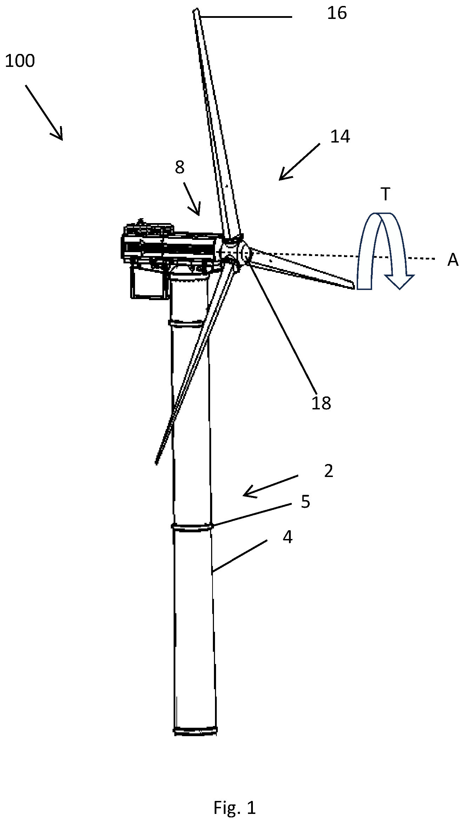

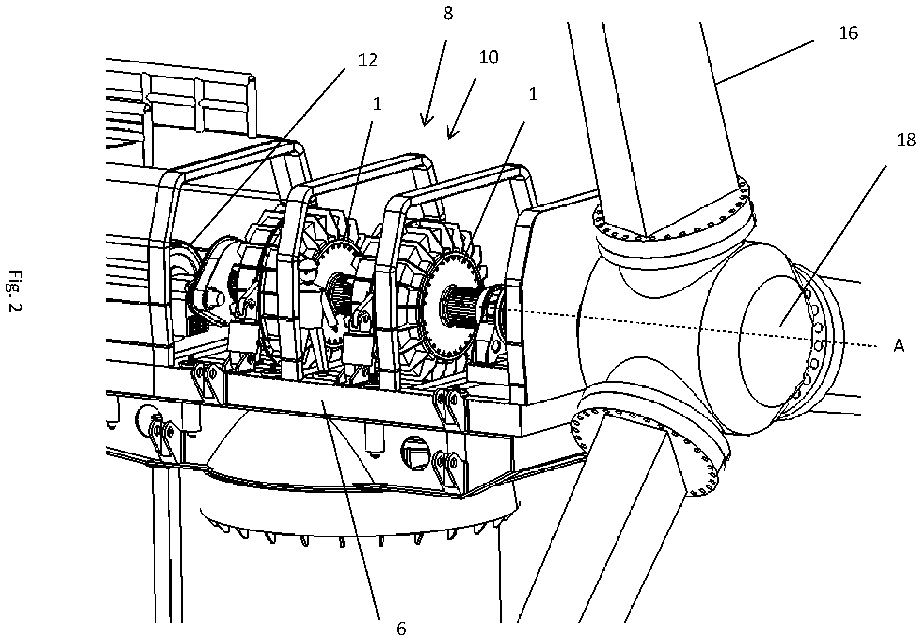

Fig. 1 and 2 show a wind turbine 100 according to the fourth aspect of the invention. The wind turbine 100 comprises a column/tower 2 composed of sections 4 and flange couplings 5. On top of the tower 2 is placed a platform 6 on which a nacelle 8 is mounted, as best shown in fig. 2. The nacelle 8 includes a gear assembly 10 assigned to a generator 12, which is driven by a wind turbine's rotor (propeller) 14. The rotor 14 includes several turbine blades 16 assigned to a hub 18, which rotates about a rotation axis A, corresponding to the axial direction / longitudinal axis of the nacelle 8 and the rotation axis of the gear device 1 and the gear assembly 10. A torque T generated by the wind's rotation of the turbine blades 16 is transferred to the generator 12 via the gear assembly 10, as will be explained in detail below. The gear assembly 10 comprises two gear devices 1 which operate in parallel, so that the load on the gear assembly 10 from the input torque T from the rotor 14 is distributed over more components. As explained above, the propeller 14, depending on the turbine size, has a relatively low rotational speed, and there is a need for gearing via the gear assembly 10, which is subjected to very large torque loads.

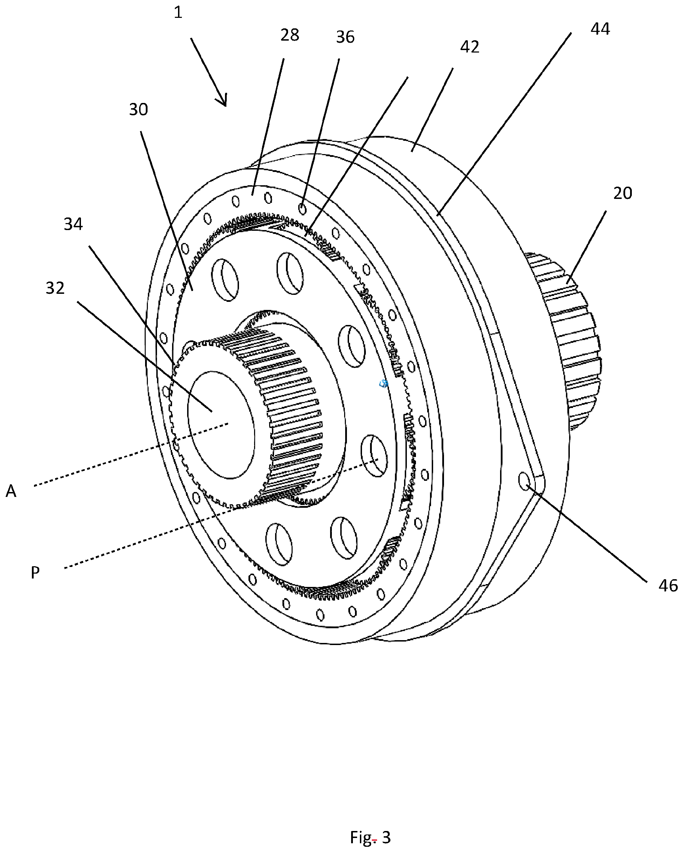

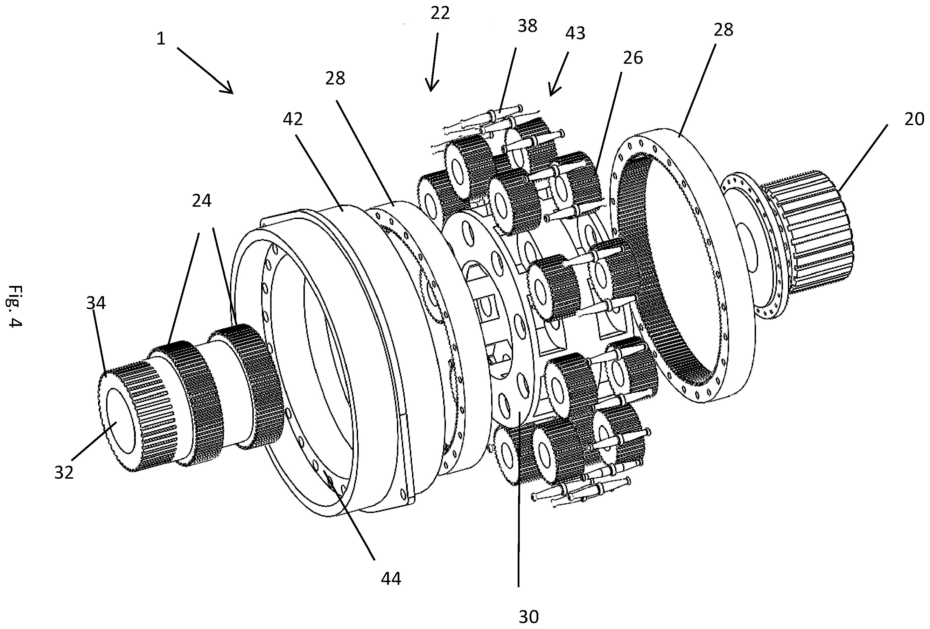

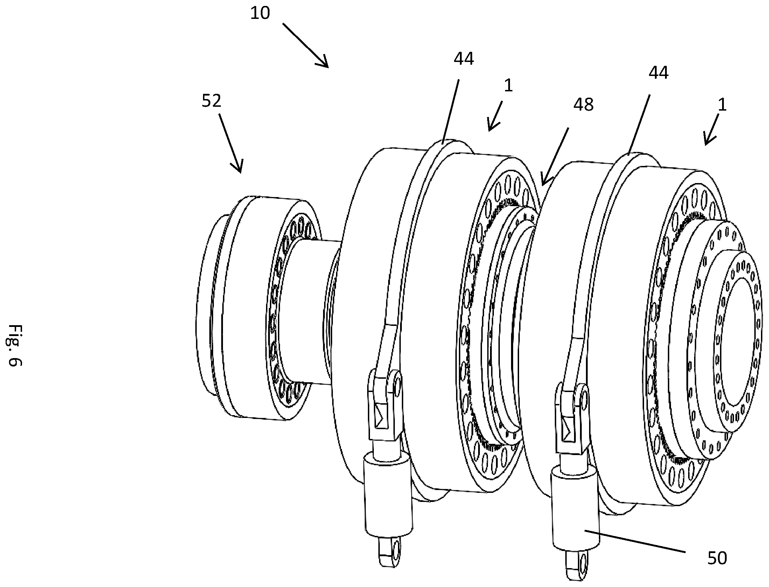

In fig. 3, a single gear device 1 according to the first aspect of the invention is shown in perspective, while fig. 4 shows an exploded sketch of the same gear device 1. An input adapter 20, here in the form of a spline connection, connects input torque T from the rotor 14 to the gear device 1. The gear device 1 includes two planetary gears 22, each comprising a sun gear 24, a plurality of planet gears 26 and a ring gear / toothed pinion 28. The planet gears 26 for each of the planetary gears 22 are supported in a common planet gear carrier 30. The spline coupling 20 is connected to the planet gear carrier 30 so it rotates at the same rotational speed as the rotor 14 of the wind turbine 1. In the embodiment shown, each planetary gear 22 comprises eight planet gears 26, i.e. the gear device 1 comprises sixteen planet gears 26. The two sun gears 24, which rotate at the same speed, are connected to a common output rotary shaft 32. The output rotary shaft 32 is provided with an output spline adapter/coupling 34 for coupling to the generator 12. If several such gear devices 1 are to be assembled with an external torque distributor, the output spline adapter 34 will instead be coupled to the external torque distributor, as will be explained below with reference to figures 6-17. The planet gears 26 are put into rotation about their own rotation axis P through the rotation of the planet gear carrier 30 about the longitudinal axis A and through their meshing with internal toothing of the ring gears 28. The sun gears 24 are rotated about the rotation axis A through their meshing with the toothing of the planet gears 26 so that the sun gears 24 rotate faster, but in the opposite direction to the input torque T, as will be known to a person skilled in the art. The two ring gears 28 are further around their circumference designed with a plurality of holes 36 in the longitudinal direction of the gear device 1. In each hole 36, one end of a shaft 38 is supported, so that opposite ends of each shaft 38 are supported in each their ring gear 28. In the embodiment shown, the shafts 38 are supported in the holes 36 around the ring gear 28 via spherical bearings in form of spherical plain bearings 40. The spherical bearings 40 allow the ring gears 28 some twisting relative to each other with full freedom of rotation. This further allows the input torque T to be distributed substantially equally between the two planetary gears 22 in the gear device 1 despite misalignments as a result of production tolerances and large loads. With this, it is essentially avoided that individual components, in particular individual planet gears 26, are overloaded.

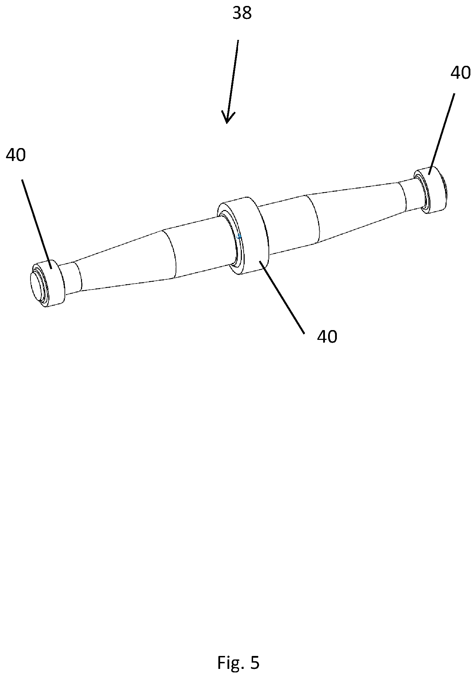

The gear device 1 further comprises a gear device housing 42 which encircles the ring gears 28 and the planet gear carrier 30 so that only the two spline couplings 20, 34 project outside the gear device housing 42 in separate directions parallel to the rotation axis A. Each of the shafts 38 is, between its two ends, also supported in an internal flange 44 in the gear device housing 42 via spherical bearings 40, so that each shaft 36 gets a three-point support. An enlarged single shaft 38 with spherical plain bearing 40 is shown in fig. 5. In the embodiment shown, the shaft 38 is widest towards the middle, where it will be supported in the gear device housing 42, while it is symmetrically tapered towards its ends, which will be supported in each their ring gear 28. In the embodiment shown, the shafts 38, together with the ring gears 28, the flange 44 and the spherical plain bearings 40 form an internal torque distributor 43 in the gear device 1.

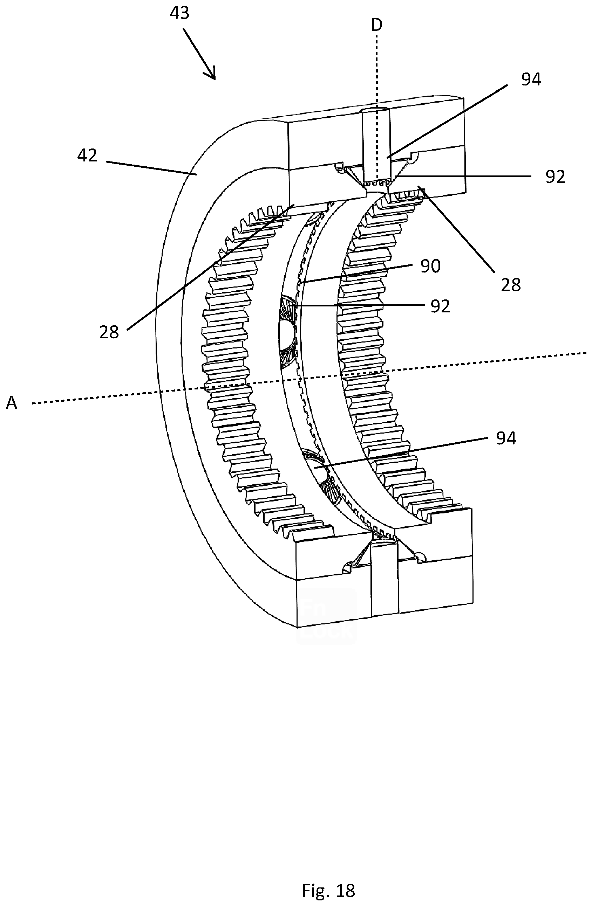

An alternative embodiment of an internal torque distributor 43 is shown in fig. 18 and discussed below.

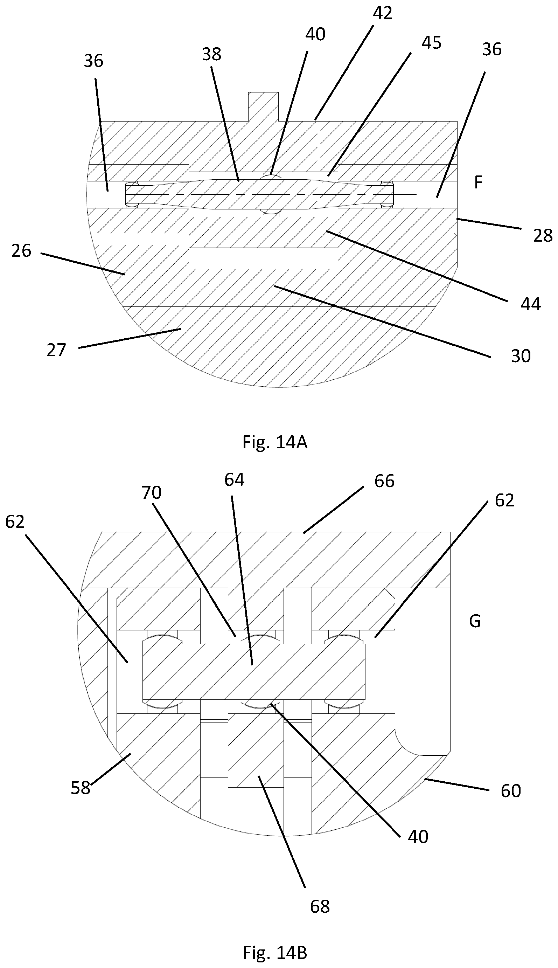

The part of the flange 44 which projects radially inwards in the gear device housing 42 is designed with a plurality of through holes 45, best shown in fig. 14A. The number of holes 45 in the internal flange 44 corresponds to the number of holes 36 in each of the ring gears 28, so that the shafts 38 have a three-point support, as explained above. A part of the flange 44 also extends radially outwards beyond the outer periphery of the gear device housing 42 and forms two portions with an extended radius and hole 46, for connection to a torque absorber, as explained below.

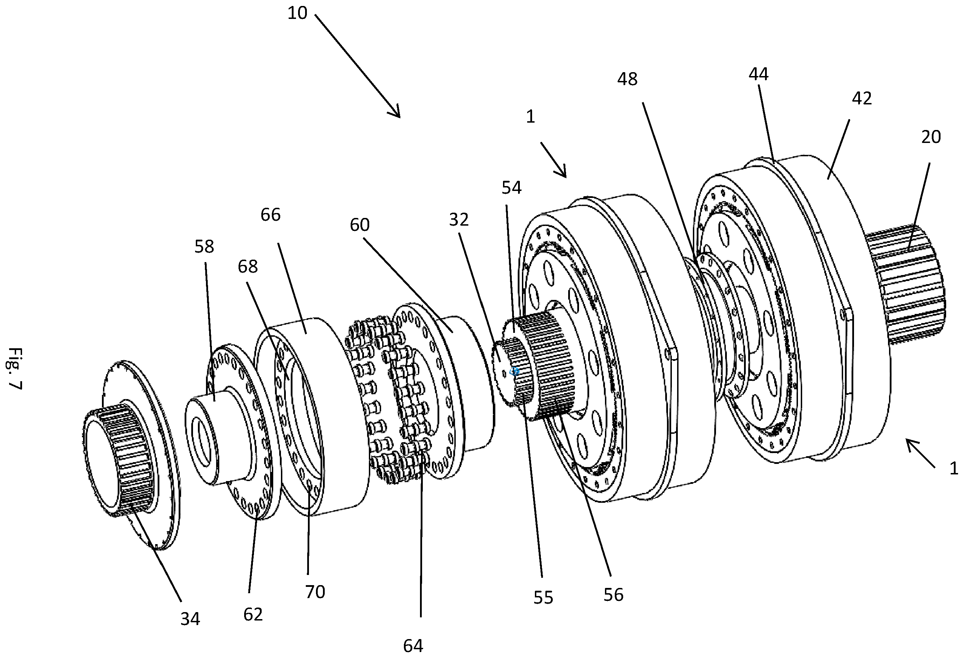

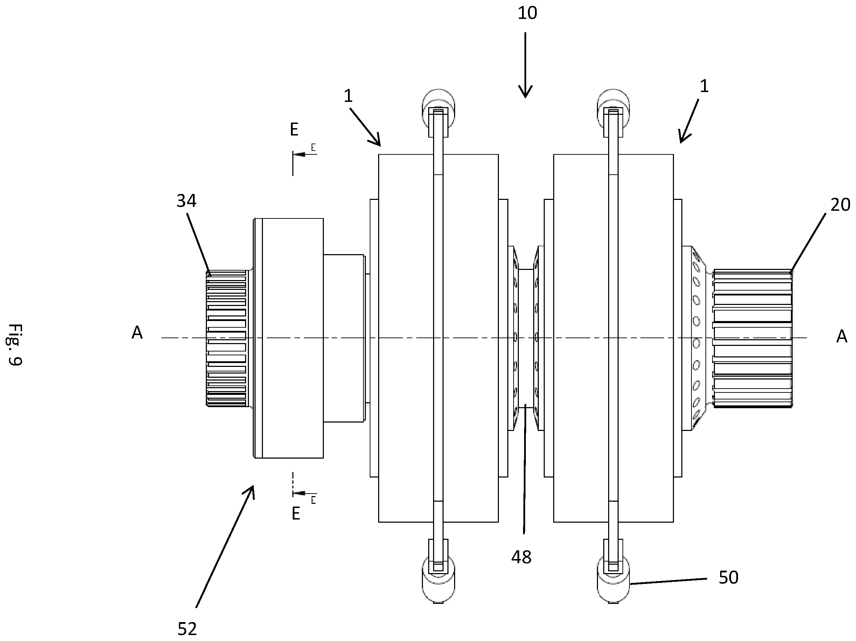

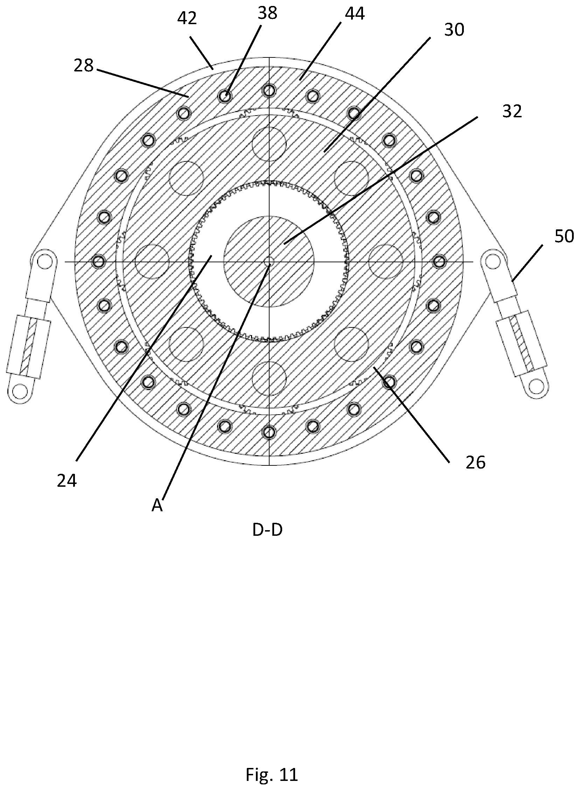

Fig. 6 shows two gear devices 1 according to the first aspect of the invention assembled into a gear assembly 10 according to the second aspect of the invention. Fig. 7 shows an exploded sketch of an equivalent solution, albeit with input and output spline couplings, which are not shown in fig. 6, but without torque absorbers. As can be seen in fig. 6, torque absorbers 50 are connected to the holes 46 in the flange 44 via bolt connections. As best shown in figs. 9 and 11, two torque absorbers 50 are connected to each gear device 1. In case of large and sudden torque loads (peak loads), the input torque T will not be fully or partially transferred through the gear assembly 10 to the generator 12, as the planetary gears 22 may fully or partially lock. Surplus torque will have to be taken out from the planet gear carriers 30, which are connected to the input torque T, and further through the gear device housing 42 which is rotatably supported in a surrounding structure via the torque absorbers 50. If the internal torque distributor 43 reaches maximum torsional range, further surplus torque will also be taken out in the torque absorber 40 via the gear device housing 42. The surrounding structure will typically be the platform 6 on top of the windmill tower 2 where the nacelle 8 is located. In the embodiment shown, the torque absorbers 50 are provided as hydraulic cylinders which function as shock absorbers on top of the windmill 100. In alternative embodiments, pneumatic cylinders or mechanical spring solutions designed to receive and dampen sudden torque loads from the gear assembly 10 may be used.

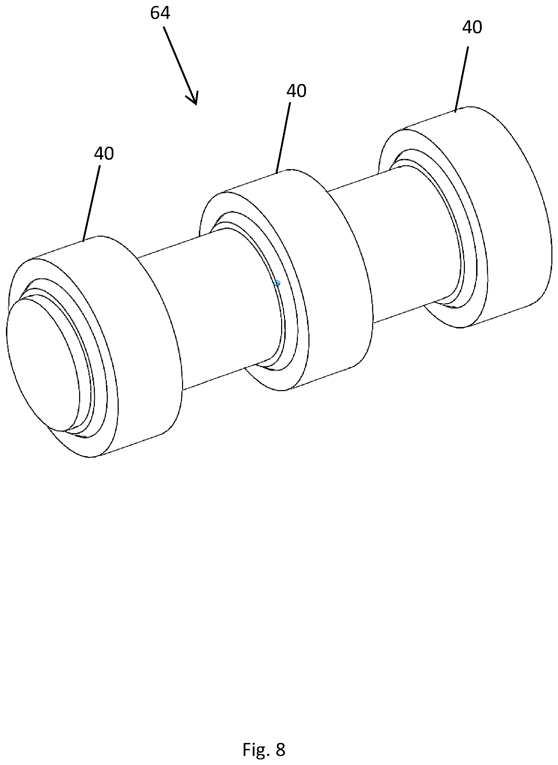

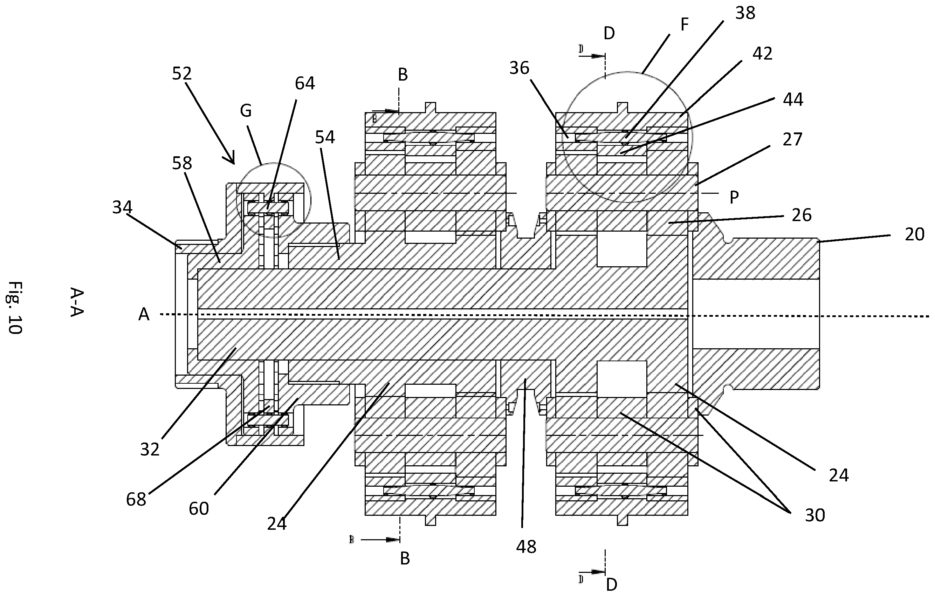

The two gear devices 1 are connected by the planet gear carrier 30 in each of the gear devices 1 being interconnected via an adapter 48. In practice, this means that input torque T rotates both planet gear carriers 30 at the same time. The gear ratio is the same as if only one gear device 1 had been used, or only one single planetary gear 22 for that matter, but the load is distributed over more components. Output shafts from each of the gear devices 1 are interconnected in an external torque distributor 52, as will be explained in the following. When two gear devices 1 are put together to a gear assembly 10, the output rotary shaft 32 from one gear device 1 is extended, i.e. from the gear device 1 which is farthest from the generator 12, so that the first output rotary shaft 32 extends centrally, inside an output rotary shaft 54 from the second gear device 1 along the rotation axis A. The first rotary shaft 32 is thus designed with a smaller diameter than the second rotary shaft 54, which is hollow inside, as can best be seen in the cross section in fig 10. The first output rotary shaft 32 is designed with spline couplings 55 and the second output rotary shaft 52 is provided with spline couplings 56, as best shown in fig. 7. Via the spline couplings 55, 56 of the output rotary shafts 32, 54, the rotary shafts are connected to respective rotary discs/plates 58, 60, which are included in the external torque distributor 52. Each of the rotary discs 58, 60 is designed with a plurality of holes 62 distributed around the circumference of the rotary discs 58, 60. A shaft 64 is supported at its ends in these holes 62 via spherical bearings 40, here in the form of spherical plain bearings, so that the first end of the shaft 64 is supported in the output rotary disc 58 connected to the first output rotary shaft 32, and the other end of the shaft 64 is supported in the rotary disc 60 connected to the second output rotary shaft 54. The external torque distributor 52 also comprises a torque distributor housing 66 which encircles the rotary discs 58, 60. The torque distributor housing 66 is provided with an internal flange 68, where the flange is designed with a plurality of through holes 70 distributed around the circumference. There are as many holes 70 in the internal flange 68 as in each of the rotary discs 58, 60 so that the shafts 64 in the external torque distributor also have a three-point support via spherical bearings, here spherical plain bearings, 40, which enable relative movement/twisting of the two output rotary shafts 32, 54. A spline adapter/coupling 34, which corresponds to the spline coupling 34 shown in figs. 3 and 4 for a single gear device 1, is attached to the external torque distributor 52, which rotates with the output shafts 32, 54, and is further coupled to the generator 12 (coupling not shown in detail). The shaft 64 with three spherical plain bearings 40 is shown enlarged in fig. 8.

Fig. 9 shows the gear assembly 10 seen from above with input spline coupling 20 at one end and output spline coupling 34 at the other end. Two torque absorbers 50 are connected to each of the gear devices 1 at one end and to the platform/plateau 6 of the windmill (not shown) at the other.

Fig. 10 shows a section seen through the line A-A from fig. 9. The spline adapter 20 is connected to the planet gear carrier 30 in the first gear device 1 as explained above. The planet gear carrier 30 thus rotates at the same rotational speed as the rotor 14 of the wind turbine 100, which is not shown in this figure. Two sets of eight planet gears 26 rotate with the planet gear carrier 30 about the rotation axis A of the gear device 1, while each planet gear 26 rotates about its own rotation axis P about the rotary shaft 27. The planet gears 26 rotate on their outer side meshing with the ring gear 28, which in normal operation is the part of the planetary gear 22 which is at rest (except for minor twisting and as a result of unevenness and particularly large torque loads, as mentioned above). On its inside, the planet gears 26 rotate meshing with a sun gear 24; each set of eight planet gears 26 with one sun gear 24. The two sun gears 24, which form part of a gear device 1, are together connected to the output rotary shaft 32 of the gear device 1. The planet gear carrier 30 of one gear device 1 is connected to the planet gear carrier 30 of the other gear device 1 via the adapter 48. The two gear devices 1 are substantially the same, with the exception of output shafts 32, 54, where the output rotary shaft 32 from the first gear device 1 (connected to the input spline coupling 20) runs concentrically inside along the rotation axis A in the output rotary shaft 54 from the second gear device 1. The ring gears 28 are, as explained above, designed with through holes 36 (see fig. 14A) parallel to the rotation axis A for supporting shafts 38 in spherical plain bearings 40. This can best be seen in fig 14A, which shows detail F in an enlarged version from fig. 10. The gear device housing 42 encircles the ring gears 28 on the outside, while the flange 44 projects radially inwards with the holes 45 which are aligned with the holes 36 in the ring gears 28, so that the shafts 38 are spherically supported at three points. In case of large torque loads and full or partial locking of the planetary gear 22, the input torque T will be transferred to the planet gear carriers 30, outwards to the ring gears 28 and the shafts 38, via the spherical plain bearings 40 to the gear device housing 42 and out into the torque absorbers 50. Such a peak load will, when the planetary gear 22 locks, thereby rotate the entire gear assembly 10 about the rotation axis A with torque take up in the torque absorbers 50.

Fig. 11 is a section through the lines D-D from fig. 10. Outermost, the gear device housing 42 with the shafts 38 supported in the holes 45 (see fig. 14A) in the flange 44 is seen. Neither the planet gear 26 nor the sun gear 24 lies in the section and is therefore not shaded.

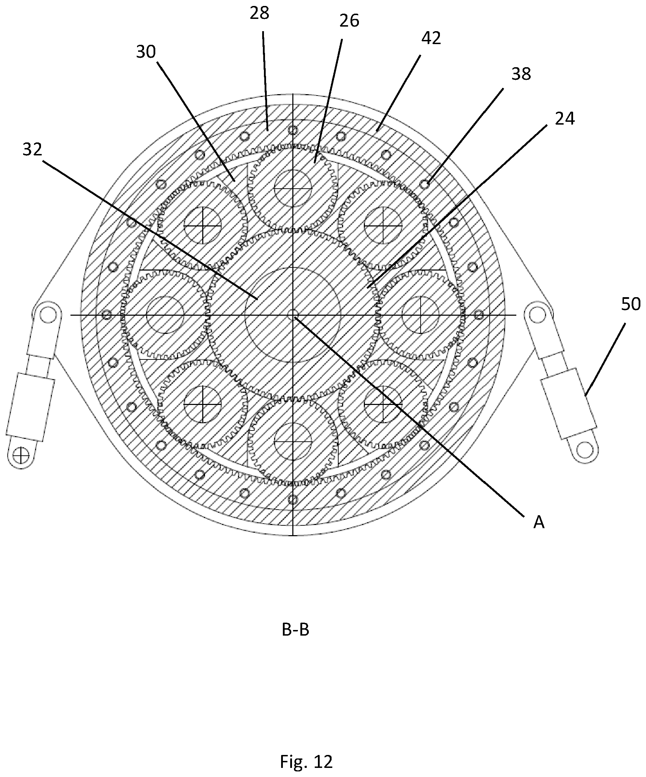

Fig. 12 shows a section through the line B-B from fig. 10. Here the section goes through the planet gears 26 and the sun gears 24, and the meshing with the internal teeth of the ring gear 28 and between the planet gears 26 and the sun gear is clearly shown. The section through the shafts 38 is made through the ring gear 28, it can be clearly seen that the shaft diameter in this section is smaller than in fig. 11.

Focus will now again be directed back to fig. 10. Output rotary shaft 32 from the first gear device 1 extends inside the output rotary shaft 54 from the second gear device 1 along the rotation axis A in the direction of the external torque distributor 52. In its distal ends, each of the output rotary shafts 32, 54 is designed with spline couplings 55, 56. As can be seen in the figure, the output rotary shaft 32 from the first gear device 1 extends past the distal end of the output rotary shaft 54 from the second gear device 1. The distal ends of the output rotary shafts 32, 54 are connected via the spline couplings 55, 56 (see fig. 7) to respective rotary discs 58, 60. As explained above, the rotary discs 58, 60 are included in the external torque distributor 52. Between the rotary discs 58, 60 is the internal flange 68 in the torque distributor housing 66, where through holes 70 in the internal flange 68 are aligned with the holes 62 in each of the rotary discs 58, 60 so that the shafts 64 in the external torque distributor are supported at three points via spherical plain bearings 40, as can best be seen in fig. 14B which shows detail G from fig. 10 in a larger scale. Output spline adapter 34 is connected to the external torque distributor housing 66 for coupling to the generator 12, which is not shown in this figure.

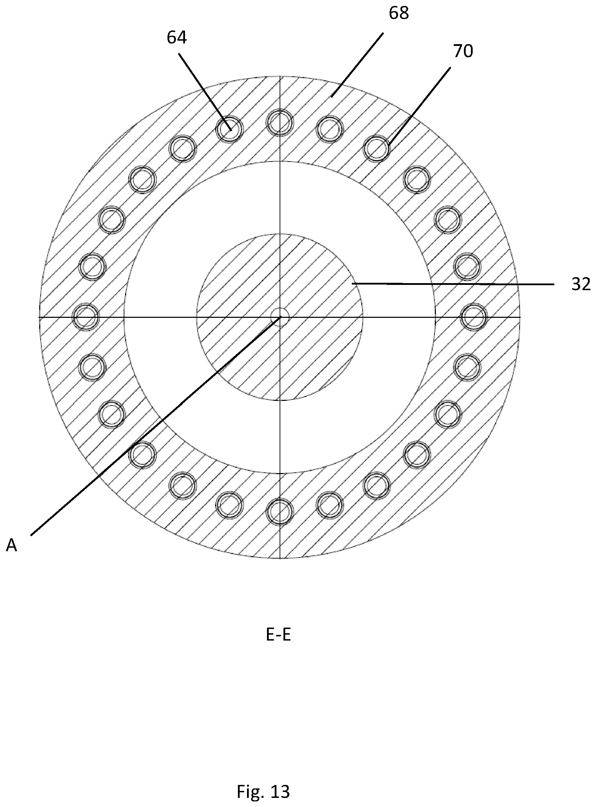

Fig. 13 shows a section through the line E-E from fig. 9 through the external torque distributor housing 66. The section is taken between the two rotary discs 58, 60 in the middle of the shafts 64 in the internal flange 68 in the torque distributor housing 66, with holes 70 for supporting the shafts 64.

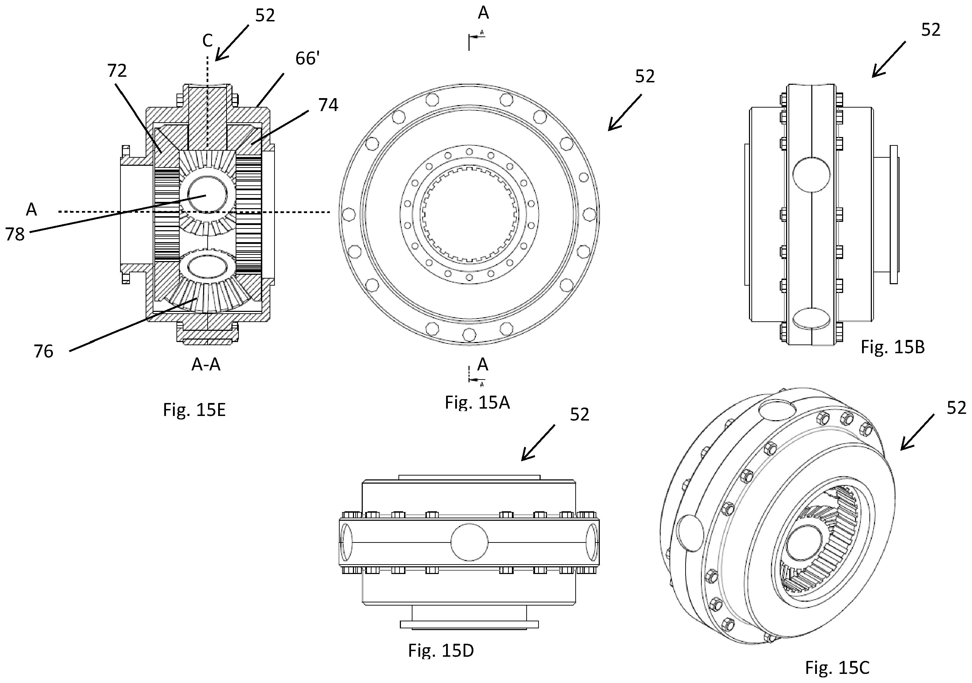

The external torque distributor 52 shown in figures 9, 10, 13 and 14B is only one of a number of different ways to distribute torque between the output shafts 32, 54. Figures 15-17, which will be described briefly in the following, show alternative ways of distributing such an output torque.

Fig. 15A-15E show the use of a differential solution in an external torque distributor housing 66'. Fig. 15A shows the torque distributor housing 66' seen from one end along the rotation axis A, while fig. 15E shows a section through the line A-A from fig. 15A. Fig. 15C shows the external torque distributor 52 seen in perspective, while fig. 15B and D show the external torque distributor 52 seen from the side. As best seen in the section in fig. 15E, the torque distributor housing 66' is provided with a first differential disc 72 and a second differential disc 74 designed with teeth arranged to rotate in meshing with the spline couplings 55, 56 on the first output rotary shaft 32 and the second output rotary shaft 54, respectively, where the rotary shafts 32, 54 are not shown in the figure. Inside the torque distributor housing 66' are four bevel gears 76 with teeth that mesh with external teeth on each of the differential discs 72, 74. The bevel gears 76 are rotatably attached to the torque distributor housing 66' about rotation bolts 78 about rotation axes C directed radially inwards in the torque distributor housing 66' perpendicularly to the rotation axis A. During "normal" operation with the same output torque on each of the rotary shafts 32, 54 and without twisting in the structure, the two output rotary shafts 32, 54 and the torque distributor housing 66' will rotate at the same speed without the bevel gears 76 rotating about their own axis C (even though these rotate together with the torque distributor housing 66' which defines the output rotary shaft around the rotation axis A). In use, the torque distributor housing 66' will be connected to an output spline adapter 34 or equivalent for coupling to the generator 12, which is not shown in the figure. If relative twisting occurs between the output rotary shafts 32, 54, the torque acting on the two differential discs 72, 74 will be different. The bevel gears 76 will then be put into rotation about their own axis C to compensate for differences, and so that the load is distributed evenly between the two differential discs 72, 74. The torque distributor housing 66' may then, temporarily, get a different rotational speed compared to the output rotary shafts 32, 54, as a result of the misalignments.

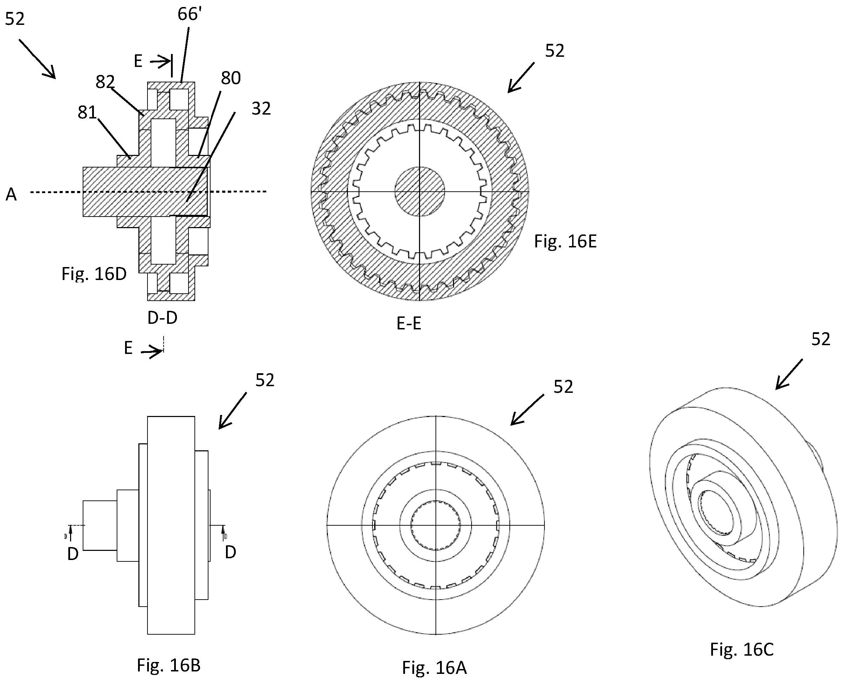

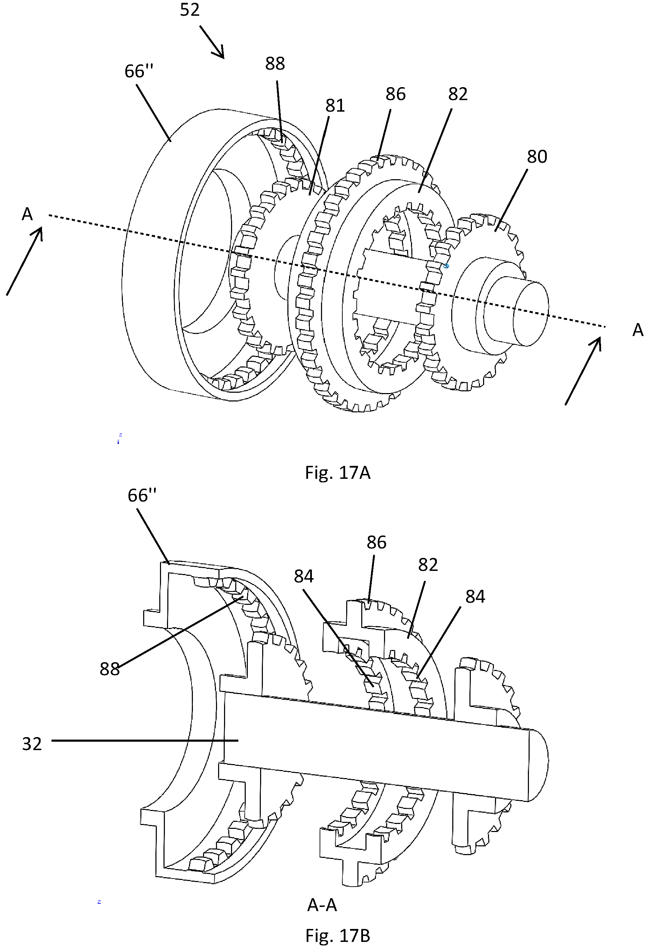

In a further alternative embodiment, torque distribution can also be achieved by designing a toothing between the rotary discs and the torque distributor housing with ball surfaces, so that some relative twisting is made possible in the tooth coupling itself. In this way, relative twisting and torque distribution is made possible without the use of external bearings. An example of such a solution with ball surface toothing is shown in figures 16 and 17.

Fig. 16A-E show a torque distributor 52 with torque distributor housing 66" according to the further, alternative embodiment in different perspectives and sections, while fig. 17A shows an exploded sketch of this. Fig. 17B shows a section through the line A-A from fig. 17A. Fig. 16A shows the torque distributor seen from an end, while fig. 16B shows the torque distributor 52 seen from the side. Fig. 16C shows the same torque distributor in perspective, 16D shows a section through the line D-D from fig. 16B, while fig. 16E shows a section through the line E-E from fig. 16D.

In the embodiment shown, the first output rotary shaft 32 (partially included in the figure) and the second output rotary shaft (not shown) are rigidly connected to a respective toothing disc 80, 81. The toothing discs 80, 81 are further connected, via ball toothing, to a surrounding ball toothing disc 82. The ball toothing disc 82 is designed with two internal ball toothing grooves 84, one for each of the toothing discs 80, 81, with a spacing along the rotation axis A. On its outer side, axially between the two ball toothing grooves 84, the ball toothing disc 82 is designed with a radially outwards projecting ball toothing groove 86. The external ball toothing groove 86 rotates meshing with an internal ball toothing groove 88 in the external torque distributor housing 66". In practice, the various components, which are rotationally connected with ball toothing, are allowed some rotation relative to each other around the rotation axis A. The embodiment shown in figures 16 and 17 provides a three-point ball support without the use of external bearings.

Fig. 18 shows a section through an internal torque distributor 43 according to an alternative embodiment. For the sake of clarity, further components included in gear device 1 are not shown in the figure. Each of the ring gears 28 in this embodiment is designed with an outer toothing groove / ring pinion 90 which is axially displaced relative to the internal toothing groove, against which the planet gear carrier 30 (not shown) rotates, and which extends around the outer circumference of the ring gears, so that the two outer toothing grooves 90 project axially inwards towards each other with a spacing. In the gap/spacing between the outer toothing grooves 90, a plurality of bevel gears 92 are arranged, supported on rotation bolts 94 in the gear device housing 42 about rotation axes D, which are radial to the rotation axis A of the gear device 1. In the embodiment shown, eight bevel gears are used (of which three whole and two halves are shown in the figure). The toothing of each of the bevel gears 92 meshes with the outer toothing groove 90 on each of the ring gears 28. In the event of misalignments, as a result of production tolerances and torque loads, some rotation of the two ring gears 28 relative to each other around the rotation axis A of the gear device 1 are permitted in that the bevel gears 92 are put into rotation about their own axis D, so that the internal torque distributor 43 functions as a differential.

It should of course be understood that the spline couplings described above may be replaced with various forms of rotary couplings between rotating parts.

It should be noted that the above-mentioned embodiments illustrate rather than limit the invention, and persons skilled in the art will be able to design many alternative embodiments without departing from the scope of the appended claims. In the claims, reference numerals in parentheses shall not be construed as limiting.

Use of the verb "to comprise" and its conjugations does not exclude the presence of elements or steps not specified in the claims. The indefinite articles "a" or "an" preceding an element does not exclude the presence of a plurality of such elements.

The fact that certain features are recited in mutually different dependent claims, does not indicate that a combination of these features cannot be used to advantage.

## Claims

1. A gear assembly (10) comprising two parallel gear devices (1), each gear device comprising:
- two parallel planetary gears (22) arranged one behind the other along a rotation axis (A) of the gear device (1), each planetary gear comprises a sun gear (24), a ring gear (28) and a set of planet gears (26), the two sets of planet gears (26) are arranged in a common planet gear carrier (30), and the two sun gears (24) are connected to a common output rotary shaft (32, 54) along the rotation axis (A) of the gear device (1);
- a gear device housing (42) which encircles at least a portion of the two planetary gears (22); and
- an internal torque distributor (43) connected to each of the ring gears (28) and to the gear device housing (42), so that the two ring gears (28) are allowed to twist relative to each other around the rotation axis (A) during use;
wherein the output rotary shafts (32, 54) from each gear device (1) are interconnected in an external torque distributor (52), so that the two output rotary shafts (32, 54) are allowed to twist relative to each other, and the planet gear carriers (30) of the two gear devices (1) together are arranged to be coupled to an input torque (T).

2. The gear assembly (10) according to claim 1, wherein each internal torque distributor (43) comprises a plurality of shafts (38) which are supported in a ring gear (28) at each end, and which are supported in the gear device housing (42) between the respective ends.

3. The gear assembly (10) according to claim 2, wherein the shafts (38) are supported in the ring gears (28) and in the gear device housing (42) by means of spherical bearings (40).

4. The gear assembly (10) according to claim 3, wherein the spherical bearings are spherical plain bearings (40).

5. The gear assembly (10) according to any previous claim, wherein the planet gear carriers (30) of the two gear devices (1) are interconnected by an adapter (48).

6. The gear assembly (10) according to any previous claim, wherein the external torque distributor (52) comprises an external torque distributor housing (66) and rotary discs (58, 60) connected to distal ends of respective rotary shafts (32, 54) from each of the gear devices (1), the external torque distributor (52) further comprises shafts (64) supported with one end in each of the rotary discs (58, 60) and in the external torque distributor housing (66) between their respective ends, whereby the two output rotary shafts (32, 54) are allowed to twist relative to each other around the rotation axis (A).

7. The gear assembly (10) according to claim 6, wherein the shafts (64) in the external torque distributor (52) are supported in the output rotary discs (58, 60) and in the external torque distributor housing (66) via spherical bearings (40).

8. The gear assembly (10) according to claim 7, wherein the spherical bearings are spherical plain bearings (40).

9. The gear assembly (10) according to any previous claim, wherein the output rotary shaft (32) from one of the gear devices (1) extends inside and concentrically with the output rotary shaft (54) from the other gear device (1) along the rotation axis (A) towards the external torque distributor (52).

10. A wind turbine (100) comprising a gear assembly (10) according to any previous claim, wherein the wind turbine (100) comprises a rotor (14) coupled to the planet gear carriers (30) with an input torque (T), and wherein the wind turbine (100) further comprises a generator (12) which is coupled to the external torque distributor (52).

11. The wind turbine (100) according to claim 10, wherein the wind turbine further comprises a torque absorber (50) which connects the gear device housing(s) (42) to a wind turbine foundation, such as e.g. a platform (6) on top of a wind turbine column (2).

12. The wind turbine (100) according to claim 11, wherein the torque absorber (50) is a hydraulic cylinder.
